# EUROPEAN PATENT SPECIFICATION

(11) **EP 1 986 427 B1**
(45) Date of publication and mention of the grant of the patent: **09.07.2014**
(21) Application number: 08250798.9
(22) Date of filing: 07.03.2008
(51) Int. Cl.: H04N 5/445, H04N 5/44, H04N 21/434, H04N 21/438, H04N 5/455, H04N 5/50

(54) **Channel list forming method, receiving apparatus, picture display apparatus, sound output apparatus**
Kanallistenerzeugungsverfahren, Empfangsvorrichtung, Bildanzeigevorrichtung, Tonausgabevorrichtung
Procédé de formation de liste de canaux, appareil de réception, appareil d'affichage d'image, appareil de sortie sonore

(30) Priority: 27.04.2007 JP 2007117960
(43) Date of publication of application: 29.10.2008
(73) Proprietor: Hitachi Consumer Electronics Co., Ltd., Tokyo 100-0004 (JP)
(72) Inventor: Hoda, Isao, Tokyo 100-8220 (JP); Ishida, Tetsuya, Tokyo 100-8220 (JP)
(74) Representative: Calderbank, Thomas Roger

(56) References cited:
- WO-A1-2007/034899
- KR-A- 20060 090 918
- US-A1- 2005 114 889

## Description

The present invention is related to a channel list forming method, a receiving apparatus, a picture display apparatus, a sound output apparatus, and a reception setting method, which can be utilized in regions where countries are located adjacent to each other, the TV broadcasting channel arrangements of which are different from each other.

Very recently, television broadcasting systems have been actively transferred from analog TV broadcasting systems into digital TV broadcasting systems all over the world, and thus, digital terrestrial broadcasts have been commenced in various countries. As digital terrestrial broadcasting system utilized in Japan, the orthogonal frequency division multiplexing system (will be abbreviated as "OFDM system" hereinafter) has been conducted, and has been operated as the ISDB-T (Integrated Service Digital Broadcasting-Terrestrial) standard. On the other hand, the OFDM system has also been employed as the digital terrestrial broadcasting system in Europe, and has be operated as the DVB-T (Digital Video Broadcasting-Terrestrial) standard.

This OFDM system implies such a system that while a large number of orthogonally arranged sub-carriers are provided in a transmission band, each of these sub-carriers is digitally modulated by way of the QAM (Quadrature Amplitude Modulation) system, or the like. Generally speaking, continual pilot signals (will be referred to as "CP signals" hereinafter) have been contained in a digital broadcasting signal produced by the OFDM system. This CP signal is employed in order to compensate a carrier frequency error. While these CP signals have been arranged in a plurality of sub-carriers within a transmission band, indexes of the sub-carriers to be arranged have been defined based upon the DVB-T standard (refer to, for instance, "Digital Video Broadcasting (DVB); Framing structure, channel coding and modulation for digital terrestrial television" ETSI EN 300 744 V1.5.1 (2004-06)).

As methods for calculating carrier frequency errors contained in digital broadcasting signals produced based upon the OFDM system, the below-mentioned technical ideas have been disclosed (refer to, for instance, JP-A-2001-308821): That is, after an OFDM frequency domain signal to which an FFT (Fast Fourrier Transform) operation has been performed is transformed into angle data, a difference between temporally forward and backward symbols is detected two times with respect to this angle data so as to extract a CP signal; and then, a calculation is made that how degree a position of a sub-carrier has been shifted from an original sub-carrier position based upon the extracted CP signal so as to calculate a broadband carrier frequency error of a OFDM signal.

Also, in digital terrestrial broadcasting based upon the OFDM system, in order to reduce interference caused by existing analog broadcasting arranged in an adjacent channel, a digital broadcasting signal offset from a channel center frequency has been transmitted. In the case of the Japanese digital terrestrial broadcasting system, the digital broadcasting signal has been offset by "+1/7 MHz" from the channel center frequency (refer to, for instance, "ARID STD-B31" Standard Specification for Transmission System of Digital Terrestrial Television issued from Dempa Sangyo Institute in Japan). On the other hand, in the case of the European digital terrestrial broadcasting system, the digital broadcasting signal has been offset by "±1/6 MHz." Also, it is conceivable that frequency precision of digital broadcasting signals transmitted from transmission stations is deteriorated.

As previously described, technical ideas capable of producing better modulation outputs have been disclosed (refer to, for example, JP-A-2001-285032): That is, in such a case that center frequencies of digital broadcasting signals have been offset as previously explained, the frequency offsets are detected during tuning operations; and then, turning frequencies are shifted by amounts equivalent to the frequency offsets based upon the detected frequency offsets in order that frequency bands of tuned channels are made coincident with filter characteristics of tuners, so that superior demodulation outputs can be obtained.

With respect to channel arrangements of digital terrestrial broadcasting systems available in various countries of Europe, more specifically, channel arrangements in the European VHF bands, center frequencies and channel bandwidths, which are different from each other in the respective European countries, have been operatively conducted. For instance, in a certain European country, a center frequency of a certain physical channel number has been operatively conducted as 186.75 MHz, and a channel bandwidth thereof has been operatively conducted as 8 MHz. In contrast, in another European country adjacent to the above-described European country, a center frequency of a different physical channel number has been operatively conducted as 186 MHz, and a channel bandwidth thereof has been operatively conducted as 8 MHz.

Under such an environment, digital terrestrial broadcast receiving apparatuses to which the conventional techniques have been applied contain the following problems: That is, the conventional digital terrestrial broadcast receiving apparatuses erroneously recognize the digital terrestrial broadcasting signal transmitted from the adjacent country, and then, form channel lists by employing the center frequencies and the frequency offsets based upon the frequency arrangement of the own country, so that the frequency band of the tuned digital terrestrial broadcasting signal is not made coincident with the filter characteristic of the tuner. Moreover, the conventional digital terrestrial broadcast receiving apparatuses have another problem, namely, cannot suitably set the analog interference eliminating filter of the same channels.

KR-A-2006-0090918 discloses an apparatus and method for turning a device to form a channel list. A controller searches a full frequency band to identify all the channels within that frequency band. The frequency band searched is that applicable for the country in which the device is located.

US-A-2005/0114889 searches for channels by setting an initial frequency and a frequency search interval. Starting at that initial frequency a designated frequency band interval is scanned for available channels, by incrementally increasing the frequency from the initial frequency using the frequency search interval.

WO-A-2007/034899 uses GPS information to locate the position of a device, and a channel scan carried out based on that location.

According to a first aspect of the invention there is provided a channel list forming method comprising:
a physical channel number selecting step for selecting a physical channel number;
a country/region selecting step for selecting one country/region from a plurality of country/regions;
an operation confirming step for judging whether or not a center frequency of said selected physical channel number in said selected country/region is listed as operating in that country/region in a channel table for the selected country/region;
a step for receiving a digital broadcasting signal when said operation confirming step judges that there is a channel arrangement corresponding to said selected physical channel in said selected country/region;
a broadcasting signal judging step for judging whether or not the digital broadcasting signal has been transmitted through said selected physical channel;
a frequency error judging step for judging whether or not a difference between a center frequency of said received digital broadcasting signal and a center frequency for the selected physical channel number of the selected county/region is located within a defined range of frequency error in such a case that said broadcasting signal judging step judges that the digital broadcasting signal has been transmitted through said selected physical channel;
a step for acquiring program allocation information, selected from a group including PAT (Program Association Table), PMT (Program Map Table), NIT (Network Information Table) and SDT (Service Description Table), of said received digital broadcasting signal in the case that said frequency error judging step judges that the difference between the center frequency of said received digital broadcasting signal and the center frequency for the selected physical channel number of the selected country/region is located within the defined range of said frequency error; and
a channel list forming step for forming a channel list based upon said acquired program allocation information.

According to a second aspect of the invention there is provided a receiving apparatus comprising:
a receiving unit for receiving a digital broadcasting signal;
a recording unit in which a physical channel number and a channel list have been stored, and said channel list is a classification of physical channels corresponding to a country/region of said physical channel number; and
a control unit operated in such a manner that one physical channel number and one country/region stored in said recording unit are acquired from the channel list stored in said recording unit; in the case that said control unit judges that a center frequency of said selected physical channel number in said acquired country/region is listed as operating in that country/region in a channel table for the selected country/region, the digital broadcasting signal has been transmitted through said selected physical channel, and a difference between a center frequency of the received signal and a center frequency for the selected physical channel number of the selected country/region is located within a defined range of frequency, said control unit acquires program allocation information, selected from a group including PAT (Program Association Table), PMT (Program Map Table), NIT (Network Information Table) and SDT (Service Description Table) of said received digital broadcasting signal; and said control unit forms a channel list based upon said acquired program allocation information.

With the present invention, even under such an environment that the countries are located adjacent to each other, the digital terrestrial broadcast receiving apparatus and the automatic channel list forming method can form the channel list based upon the suitable center frequency and the frequency offset, and can make the frequency band of the tuned digital terrestrial broadcasting signal coincident with the filter characteristics of the tuner, and also can suitably set the analog interference eliminating filter of the same channel.

In the drawings:

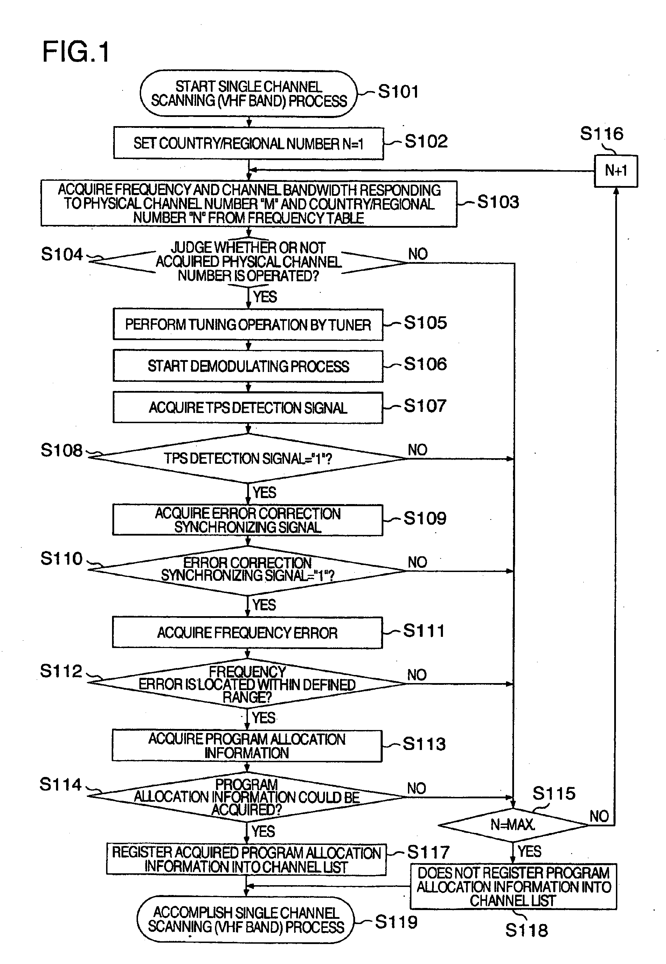

Fig. 1 is a flow chart for describing a single channel list forming function in such a case that an automatic channel list forming operation is carried out by an automatic channel list forming method according to a first embodiment of the present invention with respect to a VHF band within physical channel arrangements defined in digital terrestrial broadcasting systems employed in respective countries and respective regions.

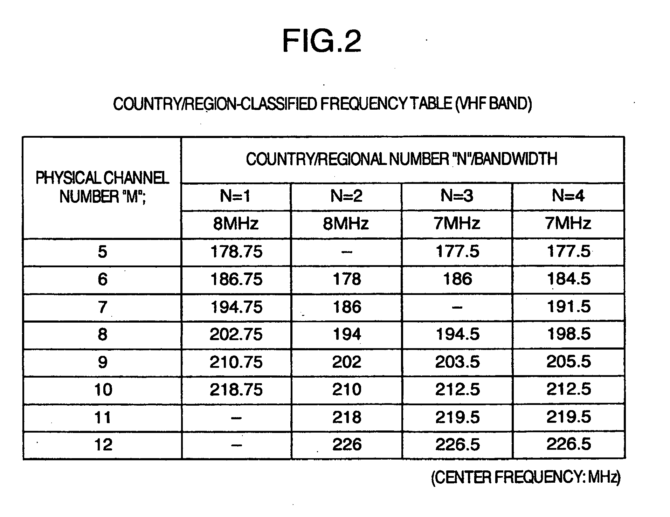

Fig. 2 represents an example of a table for indicating a relationship between physical channel numbers "M" and center frequencies of digital terrestrial broadcasting signals transmitted in the respective countries and the respective regions.

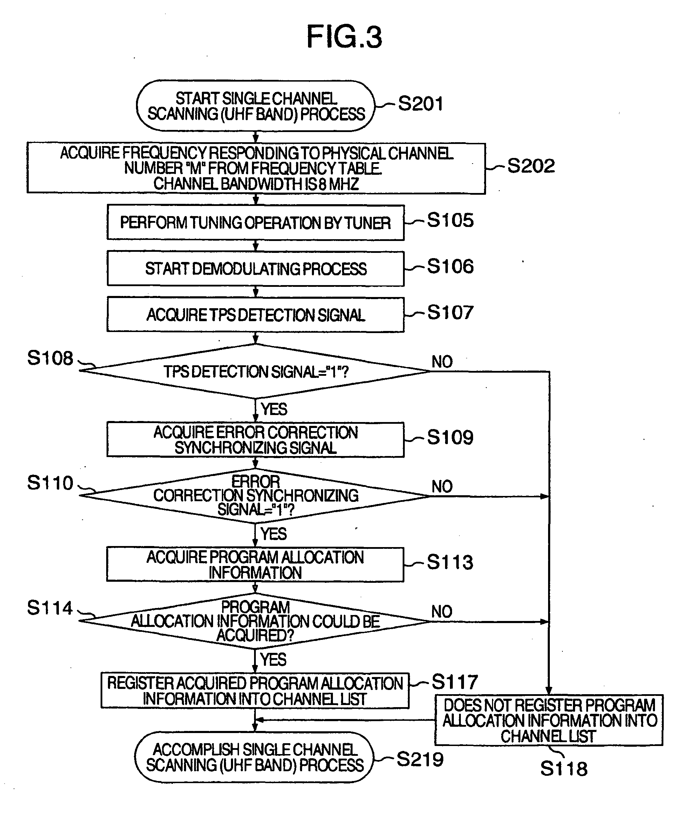

Fig. 3 is a flow chart for describing a single channel list forming function in such a case that an automatic channel list forming operation is carried out by an automatic channel list forming method according to a second embodiment of the present invention with respect to a UHF band within the physical channel arrangements defined in the digital terrestrial broadcasting systems employed in the respective countries and the respective regions.

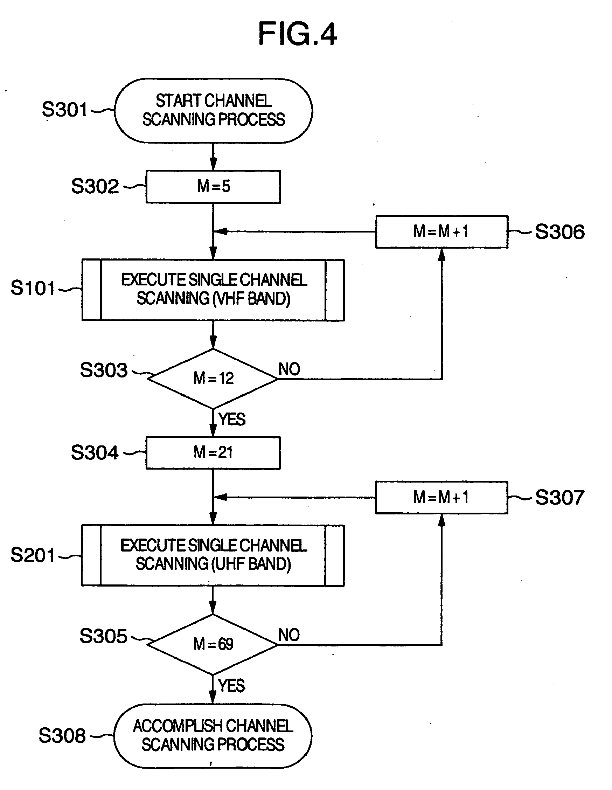

Fig. 4 is a flow chart for describing an all channel list forming function in such a case that an automatic channel list forming operation is carried out by an automatic channel list forming method according to the second embodiment of the present invention with respect to all of the physical channel arrangements defined in the digital terrestrial broadcasting systems employed in the respective countries and the respective regions.

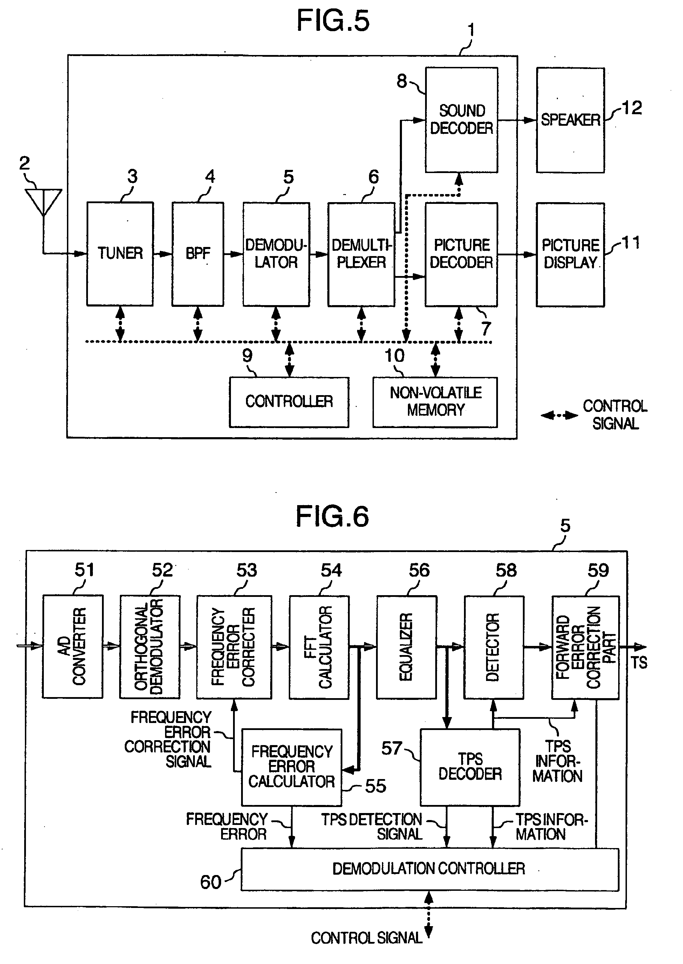

Fig. 5 is a block diagram for schematically indicating an arrangement of a digital terrestrial broadcast receiving apparatus according to the first and second embodiments of the present invention.
Fig. 6 is a block diagram for explaining in detail, operations of a demodulator employed in the digital terrestrial broadcasting apparatus shown in Fig. 5.

As a digital terrestrial broadcasting system related to the present invention, the DVB-T (Digital Video Broadcasting-Terrestrial) standard will now be exemplified which corresponds to the digital terrestrial broadcasting system utilized in the European area. In the digital terrestrial broadcasting system utilized in the European area, while interference caused from the existing analog broadcasting signals arranged in adjacent channels is reduced as a major purpose, digital terrestrial broadcasting signals can be transmitted by offsetting center frequencies of the digital terrestrial broadcasting signals from a center frequency of a channel broadwidth. This frequency offset amount is selected from "no offset", "+1/6 MHz", "-1/6 MHz", "+2/6 MHz", "-2/6 MHz," "+3/6 MHz", and "-3/6 MHz" on the transmission side. In actual digital terrestrial broadcasting operations, "no offset", "+1/6 MHz", and "-1/6 MHz" have been widely utilized.

Referring now to drawings, various embodiments of the present invention will be described in detail. It should be noted that same reference numerals shown in these drawings are employed as those for denoting the same, or similar structural elements. Also, the inventive ideas of the present invention are not limited only to the below-mentioned exemplifications represented in the drawings.

### [FIRST EMBODIMENT]

Fig. 5 is a diagram for schematically showing an arrangement of a digital terrestrial broadcast receiving apparatus 1 according to a first embodiment of the present invention. Fig. 6 is a schematic block diagram for explaining operations performed in a demodulator of the digital terrestrial broadcast receiving apparatus 1 according to the first embodiment of the present invention. In Fig. 5, the digital terrestrial broadcast receiving apparatus 1 is equipped with a tuner 3, a bandpass filter (will be referred to as "BPF" hereinafter) 4, a demultiplexer 6, a picture decoder 7, a sound decoder 8, a controller 9, and a non-volatile memory 10. Also, in Fig. 6, the above-described demodulator 5 is equipped with an A/D converter 51, an orthogonal demodulator 52, a frequency error correcter 53, an FFT (Fast Fourier Transform) calculator 54, a frequency error calculator 55, an equalizer 56, a TPS (Transmission Parameter Signaling) demodulator 57, a detector 58, a forward error correction part 59, and a demodulation controller 60.

In the above-described digital terrestrial broadcast receiving apparatus 1, for instance, an RF (Radio Frequency) signal is supplied as an input signal of this digital terrestrial broadcast receiving apparatus 1, while the RF signal is produced by receiving a digital terrestrial broadcasting signal transmitted from a broadcasting station (not shown) via a reception antenna 2.

The tuner 3 tunes a desirable physical channel with respect to the RF signal received by the reception antenna 2, and frequency-converts the tuned physical channel into an IF (Intermediate Frequency) signal, and then, supplies the converted IF signal to the BPF 4. The above-described tuning operation is controlled by the controller 9. Alternatively, such an arrangement may be formed in which a control signal derived from the controller 9 is supplied via the demodulator 5 to the tuner 3.

The BPF 4 passes only a frequency band component of the tuned desirable channel with respect to the IF signal tuned by the tuner 3, and then supplies this frequency band component of the tuned channel to the demodulator 5. While a pass bandwidth of the BPF 4 has a plurality of passband characteristics such as, for example, 7 MHz and 8 MHz of the pass bandwidths, this pass bandwidth of the BPF 4 is selected based upon a channel bandwidth designated by the controller 9.

The IF signal supplied to the demodulator 5 is supplied to the A/D converter 51 employed in the demodulator 5. The A/D converter 51 A/D-converts the supplied IF signal into a digital signal, and then, supplies this digital signal to the orthogonal demodulator 52. The orthogonal demodulator 52 orthogonally demodulates the supplied digital signal based upon a carrier signal having a predetermined frequency so as to produce a baseband signal. The baseband signal contains an I signal having a real axial component, and a Q signal having an imaginary axial component. Then, the orthogonal demodulator 52 supplies the demodulated baseband signal to the frequency error correcter 53.

The frequency error correcter 53 multiplies the supplied baseband signal by a frequency error correction signal which is produced by the frequency error calculator 55 so as to correct a frequency error, and then, supplies the baseband signal whose frequency error has been corrected to the FFT calculator 54. The FFT calculator 54 FFT-processes a valid symbol period of the supplied baseband signal so as to convert this baseband signal into such a frequency domain signal corresponding to a sub-carrier signal, and then, supplies this frequency domain signal to both the frequency error calculator 55 and the equalizer 56.

The frequency error calculator 55 performs a symbol-to-symbol differential detecting operation with respect to the supplied frequency domain signal so as to calculate a carrier frequency error based upon a correlative relationship between sub-carrier arrangement information in which a CP signal contained in the frequency domain signal supplied to the frequency error calculator 55 has been transmitted, and the arrangement information of the sub-carrier in which the CP signal determined by the DVB-T standard has been transmitted, and thus, produces a frequency error correcting signal. The frequency error correcting signal produced from the frequency error calculator 55 is supplied to the frequency error correcter 53. Also, the frequency error correcting signal produced from the frequency error calculator 55 is supplied to the demodulation controller 60. It is desirable that frequency error ranges which can be corrected by the frequency error correcter 53 and the frequency error calculator 55 may be sufficiently larger than a frequency offset amount utilized in digital terrestrial broadcasting. It is so assumed that the frequency error ranges which can be corrected by both the frequency error correcter 53 and the frequency error calculater 55 provided in the digital terrestrial broadcast receiving apparatus 1 according to the first embodiment of the present invention are given from +0.8 [MHz] to -0.8 [MHz]. It should also be noted that the correctable frequency error ranges are defined based upon the performance limitations as to the frequency error correcter 53 and the frequency error calculator 55, but are not restricted in the first embodiment of the present invention. Also, it is so assumed that when a center frequency of a digital terrestrial broadcasting signal of an RF signal is higher than such a frequency tuned in the tuner 3, the carrier frequency error is calculated as a positive frequency error, whereas when a center frequency of a digital terrestrial broadcasting signal of an RF signal is lower than such a frequency tuned in the tuner 3, the carrier frequency error is calculated as a negative frequency error.

The equalizer 56 equalizes a frequency domain signal by employing a scattered pilot signal (will be referred to as an "SP signal" hereinafter), and then, supplies the equalized frequency domain signal to the TPS demodulator 57 and the detector 58. The TPS demodulator 57 demodulates a TPS (Transmission Parameter Signaling) signal which has been transmitted based upon a predetermined sub-carrier. The TPS signal contains the transmission control information determined based upon the DVB-T standard, for instance, a modulation system of a sub-carrier, a coding.rate of a Viterbi code, and the like. It is so assumed that the transmission control information acquired in the TPS demodulator 57 will be referred to as "TPS information" hereinafter.

TPS signal demodulated by the TPS demodulator 57 is supplied to the detector 58, the error correction part 59, and the demodulation controller 60. Also, the TPS signal is demodulated by the TPS demodulator 57, and then, the TPS demodulator 57 supplies a TPS detection signal for indicating whether or not the TPS information could be detected to the demodulation controller 60. As to values of the TPS detection signals, when the TPS information could be detected by the TPS demodulator 57, the value of the TPS detection signal is assumed as "1", whereas when the TPS information could not be detected by the TPS demodulator 57, the value of the TPS detection signal is assumed as "0." It should also be noted that if the TPS detection signal is "1", then it is possible to judge that a digital broadcasting signal has been contained in a physical channel tuned by the tuner 3.

The detector 58 detects the frequency domain signal equalized by the equalizer 56 based upon the TPS information supplied from the TPS demodulator 57 in response to the modulation system modulated by the respective sub-carriers, and performs a demapping operation so as to decode data. The data decoded in the demodulator 58 is supplied to the forward error correction part 59. Also, although not shown in the drawings, the detector 58 detects signal quality information with respect to the supplied frequency domain signal, and then supplies the detected signal quality information to the demodulation controller 60.

In this case, as to the above-described signal quality information, a carrier-to-noise ratio (CNR), a signal-to-noise ratio (SNR), a modulation error ratio (MER), and the like may be employed. However, in the digital terrestrial broadcast receiving apparatus 1 according to the first embodiment of the present invention, the above-described signal quality information is not limited only to these ratios. It should also be noted that when signal quality information is larger than, or equal to a defined value, it is possible to judge that a digital broadcasting signal has been contained in a physical channel tuned by the tuner 3.

The forward error correction part 59 performs an error correction with respect to the supplied data based upon the TPS information supplied from the TPS demodulator 57, for instance, in accordance with such an information as the coding rate of the Viterbi code so as to output an MPEG-2 transport stream signal (will be referred to as "TS" signal hereinafter). The TS signal outputted from the forward error correction part 59 is supplied to the demultiplexer 6. Also, in the forward error correction part 59, for example, in the Reed-Solomon error correction, since a header byte (47 HEX) of the TS signal is detected, both an error correction synchronizing signal for indicating whether or not an error correcting process has been synchronized, and a bit error rate (BER) in the error correcting process are supplied to the demodulation controller 60.

As to values of error correction synchronizing signals with TS header byte, when the error correcting process has been synchronized in the forward error correction part 59, the error correction synchronizing signal is assumed as "1", whereas when the error correcting process has not been synchronized in the forward error correction part 59, the error correction synchronizing signal is assumed as "0." It should also be understood that if the error correction synchronizing signal is "1", or the bit error rate in the error correcting process is smaller than, or equal to the defined value, then it is possible to judge that the digital broadcasting signal has been contained in the physical channel tuned by the tuner 3.

The demodulation controller 60 controls the above-described A/D converter 51, the orthogonal demodulator 52, the frequency error correcter 53, the FFT calculator 54, the frequency error calculator 55, the equalizer 56, the TPS decoder 57, the detector 58, and also, the forward error correction part 59. The demodulation controller 60 supplies the frequency error supplied from the frequency error calculator 55, the TPS information and the TPS detection signal supplied from the TPS demodulator 57, the signal quality information supplied from the detector 58, and both the error correction synchronizing signal and the bit error rate supplied from the forward error correction part 59 via a control bus to the controller 9.

This control bus is to supply various sorts of information in response to a request issued from the controller 9 in accordance with a serial communication mode, for example, an I2C bus. However, in the digital terrestrial broadcast receiving apparatus 1 of the first embodiment, the control bus is not limited only to the above-described I2C bus. Also, the TPS detection signal may be alternatively supplied to the controller 9 as a hardware interrupt.

The demultiplexer 6 demultiplexes the supplied TS signal so as to obtain picture components, sound components, and data components. Then, the demultiplexer 6 supplies such a picture component having a PID (Packet ID) designated by the controller 9 to the picture decoder 7, and also, supplies such a sound component having a PID designated by the controller 9 to the sound decoder 8.

Further, the demultiplexer 6 acquires various sorts of tables contained in PSI (Program Specification Information) and SI (Service Information) from the supplied TS signal, and then, supplies the acquired tables to the controller 9. As these tables, for instance, there are a PAT (Program Association Table), a PMT (Program Map Table), an NIT (Network Information Table), an SDT(Service Description Table), and the like, while these tables will be referred to as "program allocation information" hereinafter. Based upon this program allocation information, a channel list may be produced. It is so assumed that the tables acquired in this example contains at least one of the tables defined in the DVB-T standard.

The picture decoder 7 decodes the supplied picture component, and then outputs a picture signal. The digital terrestrial broadcast receiving apparatus 1 may be alternatively equipped with a picture display 11, and may display the picture signal outputted from the picture decoder 7 on the picture display 11.

The sound decoder 8 decodes the supplied sound component, and then outputs a sound signal. The digital terrestrial broadcast receiving apparatus 1 may be alternatively equipped with a speaker 12, and may output the sound signal outputted from the sound decoder 8.

The controller 9 controls the tuner 3, the BPF 4, the demodulator 5, the demultiplexer 6, the picture decoder 7, and the sound decoder 8. As a control line for handling this control signal, a serial bus, a slow bus, and the like may be conceived. However, in the first embodiment of the present invention, the sorts of control lines are not limited thereto. Also, the controller 9 forms a channel list about receivable digital terrestrial broadcasting programs based upon the program allocation information supplied from the demultiplexer 6, and then, stores the formed channel list into the non-volatile memory 10.

The non-volatile memory 10 stores thereinto the channel list supplied from the controller 9, and a table for indicating a relationship, for example, as shown in Fig. 2, physical channel numbers of respective countries, center frequencies, and channel bandwidths.

Referring now to Fig. 1 to Fig. 2, a description is made of operations when the digital terrestrial broadcast receiving apparatus 1 with employment of the above-described arrangement performs the single channel list forming function in the VHF band.

Fig. 2 shows one example as to a table for representing a relationship between physical channel numbers "M" and center frequencies of digital terrestrial broadcasting signals which are transmitted in respective countries and respective regions, while units of the center frequencies are selected to be "MHz." With respect to countries and regions whose channel bandwidths and channel arrangements are equal to each other, the same country/region numbers "N" are applied to these countries and regions in order to be classified. It should also be understood that symbol "-" indicates that in a relevant country/region, there is no such a channel arrangement corresponding to a relevant physical channel number. In Fig. 2, although the entire countries and regions have been classified into countries and regions having 4 sorts of channel arrangements, in the first embodiment of the present invention, the country/region classification is not limited only to that shown in Fig. 2. Also, the relationship between the physical channel numbers and the frequency arrangements of Fig. 2 merely indicate one example. Accordingly, in the first embodiment of the present invention, the frequency arrangement is not limited only to such a frequency arrangement indicated in Fig. 2.

Fig. 1 is a flow chart for describing the single channel list forming function in the case that the automatic channel list forming operation is carried out with respect to the VHF band within the physical channel arrangements defined by the digital terrestrial broadcast systems in the respective countries and respective regions in the first embodiment to which the present invention has been applied.

First, assuming now that the physical channel number is "M", a single channel list forming operation is commenced from a step S101, and then, a single channel scanning process executed by the controller 9 is advanced to a step S102. In the step S102, the controller 9 selects, for example, "N=1" as the country/regional number from the classification of the channel arrangement shown in Fig. 2, and then, the single channel scanning process thereof is advanced to a step S103.

In the step S103, the controller 9 acquires a tuning frequency and a channel bandwidth, which correspond to the physical channel number "M" and the country/regional number "N", from the country/region classified channel table stored in the non-volatile memory 10, and then, the single channel scanning process is advanced to a step S104. In the next step S104, the controller 9 judges whether or not this physical channel number has been operated in the selected country/regional number. In such a case that this physical channel number has been operated in the selected country/regional number (namely, in case that tuning frequency acquired in step S103 is equal to numeral value other than "-"), the single channel scanning process is advanced to a step S105. To the contrary, in such a case that this physical channel number has not been operated in the selected country/regional number (namely, in case that tuning frequency acquired in step S103 is equal to "-"), the single channel scanning process is advanced to a step S115.

In the step S105, the controller 9 controls the tuner 3 in such a manner that such a digital terrestrial broadcasting signal having the tuning frequency acquired in the previous step S103 is tuned, and then, the single channel scanning process is advanced to a step S106. In this next step S106, the controller 9 controls the demodulator 5 so as to perform a demodulating process with respect to the IF signal tuned by the tuner 3, and then, the single channel scanning process is advanced to a step S107.

In the step S107, the controller 9 acquires a TPS detection signal from the demodulator 5, and thereafter, the single channel scanning process is advanced to a step S108. In the next step S108, the controller 9 judges whether or not the TPS information could be detected by the TPS decoder 57. In the case that the TPS information could be detected by the TPS decoder 57 (namely, in case that TPS detection signal is "1"), the single channel scanning process is advanced to a step S109. To the contrary, in the case that the TPS information could not be detected by the TPS decoder 57 (namely, in case that TPS detection signal is "0"), the single channel scanning process is advanced to a step S115.

In the step S109, the controller 9 acquires an error correction synchronizing signal, synchronizing with TS header byte, from the demodulator 5, and then, the single channel scanning process is advanced to a step S110. In the next step S110, the controller 9 judges whether or not the error correction process has been synchronized with TS header byte in the forward error correction part 59. In the case that the error correction process has been synchronized (namely, in case that error correction synchronizing signal is "1"), and then, the single channel scanning process is advanced to a step S111. To the contrary, in the case that the error correction process has not been synchronized (namely, in case that error correction synchronizing signal is "0"), and then, the single channel scanning process is advanced to a step S115.

It should also be noted that the above-described judging operation executed in the step S110 may be alternatively realized by judging whether or not signal quality information with respect to a frequency domain signal supplied from the detector 58 exceeds a certain defined value, or by judging whether or not a bit error rate in an error correcting process, which is supplied from the forward error correction part 59, becomes smaller than a defined value.

In the step S111, the controller 9 acquires a frequency error from the demodulator 5, and then, the single channel scanning process is advanced to a step S112. Next, in the step S112, the controller 9 judges whether or not the frequency error acquired in the step S111 exceeds a defined range. When the acquired frequency error exceeds the defined range, the single channel scanning process is advanced to a step S115. To the contrary, when the acquired frequency error is present in the defined range, the single channel scanning process is advanced to a step S113.

In the step S113, the controller 9 acquires program allocation information from the demultiplexer 6, and then, the single channel scanning process is advanced to a step S114. Also, in this step S113, the controller 9 controls an acquisition time in such a manner that the time required for acquiring the program allocation information is continued up to, for example, 10 seconds in maximum. It is desirable that a waiting time for acquiring this program allocation information is longer than, or equal to the transmission time period of the PAT, namely, the longest transmission time period within the various sorts of tables contained in the program allocation information.

Next, in the step S114, the controller 9 judges whether or not the program allocation information could be acquired. In the case that the controller 9 could acquire either a portion or all of the program allocation information, the single channel scanning process is advanced to a step S117. To the contrary, when the controller 9 could not acquire the program allocation information, the single channel scanning process is advanced to a step S115.

When the single channel scanning process reaches the step S115, the controller 9 judges that there is no digital terrestrial broadcasting signal which corresponds to the channel table of the selected country/regional number "N." Subsequently, in the step S115, the controller 9 judges whether or not physical channels of all of the country/regional numbers contained in the channel table stored in the non-volatile memory 10 have been turned. For example, in the case that such a channel table shown in Fig. 2 is contained, if N=4, then the single channel scanning process is advanced to a step S118, whereas if N is smaller than, or equal to 4, then the single channel scanning process is advanced to a step S116.

In the step S116, the controller 9 adds "1" to the country/regional number "N", and then, the single channel scanning process is advanced to the step S103. Until all of the country/regional numbers are accomplished, the controller 9 repeatedly executes the single channel scanning process loop defined from the step S103 to the step S115.

In the step S117, the controller 9 forms a channel list based upon the tuning frequency tuned in the step S105, the frequency error acquired in the step S111, and the program allocation information acquired in the step S113, and performs a control operation in such a manner that the formed channel list is stored in the non-volatile memory 10, and then, the single channel scanning process is advanced to a step S119. On the other hand, in the step S118, the controller 9 judges that the digital terrestrial broadcasting signal is not present in the selected physical channel number "M", and thus, registers no item in the channel list, and then, the single channel scanning process is advanced to a step S119. In this step S119, the controller 9 accomplishes the single channel list forming operation.

In a subsequent tuning operation performed based upon the formed channel list, the present tuning frequency is corrected to become an optimum tuning frequency based upon the frequency error and the tuning frequency stored in the non-volatile memory 10 in the step S117, so that even when the above-described frequency offset is present, the frequency error can be reduced as small as possible.

As to a concrete operation in such a case that the single channel list forming function is executed in accordance with the above-described method, a description is made of such an example that physical channel numbers "M=6" and "M=7" are exemplified. In this exemplification, it is so assumed that a digital terrestrial broadcasting signal whose center frequency is 186 MHz and whose channel bandwidth is 8 MHz is contained in the RF signal received by the reception antenna 2. Also, it is assumed that when the frequency (186.75 MHz) of the physical channel number "M=6" in the country/regional number "N=1" is tuned, such a digital terrestrial broadcasting signal having the center frequency of 186 MHz can be corrected by the frequency error correcter 53 and the frequency error calculator 55. In other words, this assumption implies that the digital terrestrial broadcasting signal in which 186 MHz is the center frequency thereof is located within such a correctable frequency range (+0.8 MHz to -0.8 MHz) that the tuning frequency (186.75 MHz) is set as a center of this correctable frequency range. Also, it is assumed that when the frequency (186.75 MHz) of the physical channel number "M=6" in the country/regional number "N=1" is tuned, such a digital terrestrial broadcasting signal having the center frequency of 178 MHz cannot be corrected by the frequency error correcter 53 and the frequency error calculator 55. In other words, this assumption implies that the digital terrestrial broadcasting signal in which 178 MHz is the center frequency thereof is located outside such a correctable frequency range (+0.8 MHz to -0.8 MHz) that the tuning frequency (186.75 MHz) is set as the center of this correctable frequency range.

Under such an environment, the below-mentioned operation is desirably performed: That is, in the case that the single channel list forming operation as to the physical channel number "M=6" is performed, the digital terrestrial broadcasting signal having the center frequency of 186 MHz is not registered in the channel list, whereas in the case that the single channel list forming operation as to the physical channel number "M=7" is performed, the digital terrestrial broadcasting signal having the center frequency of 186 MHz is registered in the channel list.

Firstly, assuming now that the physical channel number is "M=6" and the country/regional number is "N=1", a single channel list forming operation is commenced from the step S101. At this time, since the tuning frequency is 186.75 MHz, when the digital terrestrial broadcasting signal whose center frequency is 186 MHz is inputted as the RF signal, a carrier frequency error is corrected by the frequency correcter 53, and the normal TS (transport stream) is outputted from the demodulator 5.

In other words, the TPS information is detected in the TPS demodulator 57, and the error correcting process is synchronized in the forward error correction part 59. As a consequence, in the step S108, the TPS detection signal becomes "1", and furthermore, in the step S109, the error correction synchronizing signal becomes "1", and then, the single channel scanning process is advanced to the step S111. However, as the frequency error acquired in the step S111, such a difference between the frequency set to the tuner 3 and the frequency of the digital terrestrial broadcasting signal supplied to the tuner 3 is acquired, namely, such a value of approximately - 0.75 MHz is acquired, and then, the single channel scanning process is advanced to the step S112.

In the step S112, when the defined range of the frequency error is defined as such a range from "Y=0.5-1/24 [MHz]" up to "Z=+0.5+1/24 [MHz]", since the frequency error is located outside the defined range, the single channel scanning process is advanced to the step S115.

Next, in the country/regional number "N=2", since a difference between the tuning frequency (178 MHz) and the frequency (186 MHz) of the RF signal is large, the carrier frequency error cannot be corrected by the frequency correcter 53. In other words, in the FFT calculator 54, the FFT process cannot be carried out, and in the TPS decoder 57, the TPS information cannot be acquired. As a consequence, in the step S108, the TPS detection signal becomes "0", and then, the single channel scanning process is advanced to the step S115. Subsequently, in the country/regional numbers "N=3" and "N=4", since the channel bandwidths are different from each other, the FFT process cannot be performed under normal condition in the FFT calculator 54, so that the TPS information cannot be acquired in the TPS decoder 57.

As a consequence, the TPS detection signal becomes "0" in the step S108, and then, the single channel scanning process is advanced to the step S115. As previously described, the controller 9 judges that the digital terrestrial broadcasting signal is not present in the selected physical channel numbers "M" in all of the country/regional numbers, and then, accomplishes the single channel list forming operation without registering any channel in the channel list. As apparent from the foregoing descriptions, when the single channel list forming operation is carried out, the control operation of the controller 9 is not brought into a program information acquisition waiting condition.

Next, while the physical channel number is set as "M=7", and the country/regional number is set as "N=1", a single channel list forming operation is commenced from the step S101. At this time, since a difference between the tuning frequency (194.75 MHz) and the frequency (186 MHz) of the RF signal is large, the carrier frequency error cannot be corrected by the frequency correcter 53. In other words, in the FFT calculator 54, the FFT process cannot be carried out, and in the TPS decoder 57, the TPS information cannot be acquired. As a consequence, in the step S108, the TPS detection signal becomes "0", and then, the single channel scanning process is advanced to the step S115. Next, in the step S116, the country/regional number is set as "N=2", and then, the single channel scanning process is advanced to the step S103. At this time, since the tuning frequency is 186 MHz, when the digital terrestrial broadcasting signal whose center frequency is 186 MHz is inputted as the RF signal, all of the demodulating process operations are carried out by the demodulator 5 under normal operation, and the normal TS is outputted from the demodulator 5.

As a consequence, the TPS detection signal becomes "1" in the step S108, and the error correction synchronizing signal becomes "1" in the step S110, and then, the single channel scanning process is advanced to the step S111. Next, as the frequency error acquired in the step S111, such a difference between the frequency set to the tuner 3 and the frequency of the digital terrestrial broadcasting signal supplied to the tuner 3 is acquired, namely, such a value which is nearly equal to zero is acquired, and then, the single channel scanning process is advanced to the step S112. In the step S112, when the defined range of the frequency error is defined as such a range from "Y=- 0.5-1/24 [MHz]" up to "Z=+0.5+1/24 [MHz]", since the frequency error is located within the defined range, the single channel scanning process is advanced to the step S113. Next, the program allocation information can be acquired in the step S113, and then, the single channel scanning process is advanced to the step S117. In this step S117, a channel list is formed based upon the program allocation information acquired in the step S113, and the formed channel list is registered in the non-volatile memory 10, so that the single channel list forming operation of the VHF band is accomplished.

In the first embodiment of the present invention, the country/regional number is sequentially added from "N=1" and the single channel list forming operation is carried out. For instance, even when the user changes the sequence to be executed by selecting the country/region, a similar effect may be achieved.

Generally speaking, in the tuner 3, since the RF signal is converted into the IF signal having the frequency (36+1/6 MHz) by using such a local oscillating signal that a step frequency of a frequency dividing ratio is set to 1/6 MHz, discrete tuning frequencies are set which have been segmented every 1/6-MHz step. For instance, a frequency of a local oscillating signal in such a case that a frequency of an RF signal is 186 MHz is equal to (222+1/6) MHz, and a frequency dividing ratio is equal to (222+1/6)/(1/6)=1333. On the other hand, at the tuning frequency of 186.75 MHz indicated as one example of the operation in the first embodiment according to the present invention, the frequency of the local oscillating signal becomes (222+3/4+1/6) MHz, and the frequency dividing ratio becomes (222+3/4+1/6)/(1/6)=1337.5 in the light of calculation. However, since the frequency dividing ratio must be an integer, the value below the decimal point is rounded off, so that a tuning frequency is selected while the frequency dividing ratio is set as 1338. That is to say, "186+5/6 MHz" is determined as the tuning frequency.

As a result, in the case that the frequency of the digital terrestrial broadcasting signal is (186.75-3/6) MHz, if (186+5/6) MHz is selected as the tuning frequency, then the frequency error acquired in the step S111 becomes -7/12 MHz, so that this frequency error is located outside the defined range of the frequency error in the above-described step S112. The fact implies that the digital terrestrial broadcasting signal having the frequency offset amount of [-3/6 MHz], which should be normally received, cannot be registered in the channel list.

While the above-described difficult case (namely, specific digital terrestrial broadcasting signal cannot be registered in channel list) is considered, the defined range of the frequency error in the step S112 is determined from "Y=-0.5-4/36 [MHz]" up to "Z=+0.5+1/36 [MHz]." As a result, even in the above-described case, the frequency error is located within the defined range, so that such a digital terrestrial broadcasting signal having the frequency offset amount of [-3/6 MHz] can be registered in the channel list.

The defined range of the frequency error has been provided in the controller 9. Further, as the defined range of the frequency error, the above-explained range defined from "Y=-0.5-1/24 [MHz]" up to "Z=+0.5+1/24 [MHz]", and also the above-described range defined from "Y=-0.5-4/36 [MHz]" up to "Z=+0.5+1/36 [MHz]" are employed. However, the present invention is not limited only to these defined ranges.

It should also be understood that in the first embodiment of the present invention, the defined range of the frequency error in the step S112 has been defined from "Y" to "Z." Alternatively, the defined range of the frequency error may be fine-adjusted in accordance with the frequency table containing the frequencies classified by the countries and the regions shown in Fig. 2; the tuning frequency error of the tuner 3; the frequency error ranges which can be corrected by the frequency error correcter 53 and the frequency error calculator 55; and so on.

### [SECOND EMBODIMENT]

Referring now to Fig. 3 and Fig. 4, a description is made of operations in such a case that an all channel list forming function is carried out in the digital terrestrial broadcast receiving apparatus 1 which has been constructed as indicated in Fig. 5 and Fig. 6, in accordance with a second embodiment of the present invention.

A first description is made of operations when a single channel list forming function in a UHF band is carried out in the digital terrestrial broadcast receiving apparatus 1 which has been constructed as indicated in Fig. 5 and Fig. 6 with reference to Fig. 3. It should be understood that as to digital terrestrial broadcasting signals transmitted in the UHF band, both channel arrangements and channel bandwidths are commonly used in respective countries.

Fig. 3 is a flow chart for describing a single channel list forming function in such a case that an automatic channel list forming operation is carried out by an automatic channel list forming method according to a second embodiment of the present invention with respect to a UHF band within the physical channel arrangements defined in the digital terrestrial broadcasting systems employed in the respective countries and the respective regions. It should be noted that the same reference numerals shown in Fig. 1 will be employed as those for denoting same, or similar structural elements indicated in Fig. 3.

Firstly, while the physical channel number is set as "M", a single channel list forming operation is commenced from a step S201, and then, a single channel scanning process executed by the controller 9 is advanced to a step S202. In the step S202, the controller 9 acquires such a tuning frequency responding to the physical channel number "M" from the channel table stored in the non-volatile memory 10, and then, the single channel scanning process thereof is advanced to a step S105.

In the step S105, the controller 9 controls the tuner 3 in such a manner that such a digital terrestrial broadcasting signal having the tuning frequency acquired in the previous step S202 is tuned, and then, the single channel scanning process is advanced to a step S106. In this next step S106, the controller 9 controls the demodulator 5 so as to perform a demodulating process with respect to the IF signal tuned by the tuner 3, and then, the single channel scanning process is advanced to a step S107.

In the step S107, the controller 9 acquires a TPS detection signal from the demodulator 5, and thereafter, the single channel scanning process is advanced to a step S108. In the next step S108, the controller 9 judges whether or not the TPS information could be detected by the TPS decoder 57. In the case that the TPS information could be detected by the TPS decoder 57 (namely, in case that TPS detection signal is "1"), the single channel scanning process is advanced to a step S109. To the contrary, in the case that the TPS information could not be detected by the TPS decoder 57 (namely, in case that TPS detection signal is "0"), the single channel scanning process is advanced to a step S118.

In the step S109, the controller 9 acquires an error correction synchronizing signal from the demodulator 5, and then, the single channel scanning process is advanced to a step S110. In the next step S110, the controller 9 judges whether or not the error correction process has been synchronized in the forward error correction part 59. In the case that the error correction process has been synchronized (namely, in case that error correction synchronizing signal is "1"), and then, the single channel scanning process is advanced to a step S113. To the contrary, in the case that the error correction process has not been synchronized (namely, in case that error correction synchronizing signal is "0"), and then, the single channel scanning process is advanced to a step S118.

In the step S113, the controller 9 acquires program allocation information from the demultiplexer 6, and then, the single channel scanning process is advanced to a step S114. Also, in this step S113, the controller 9 controls an acquisition time in such a manner that the time required for acquiring the program allocation information is continued up to, for example, 10 seconds in maximum. It is desirable that a waiting time for acquiring this program allocation information is longer than, or equal to the transmission time period of the PAT, namely, the longest transmission time period within the various sorts of tables contained in the program allocation information. Next, in the step S114, the controller 9 judges whether or not the program allocation information could be acquired. In the case that the controller 9 could acquire either a portion or all of the program allocation information, the single channel scanning process is advanced to a step S117. To the contrary, when the controller 9 could not acquire the program allocation information, the single channel scanning process is advanced to a step S118.

In the step S117, the controller 9 forms a channel list based upon the tuning frequency tuned in the step S105, the frequency error acquired in the step S111, and the program allocation information acquired in the step S113, and performs a control operation in such a manner that the formed channel list is stored in the non-volatile memory 10, and then, the single channel scanning process is advanced to a step S119.

On the other hand, in the step S118, the controller 9 judges that the digital terrestrial broadcasting signal is not present in the selected physical channel number "M", and thus, registers no channel array information in the channel list, and then, the single channel scanning process is advanced to a step S119. In this step S119, the controller 9 accomplishes the single channel list forming operation for the UHF band.

Fig. 4 is a flow chart for describing an all channel list forming function in such a case that an automatic channel list forming operation is carried out by an automatic channel list forming method according to the second embodiment of the present invention with respect to all of the physical channel arrangements defined in the digital terrestrial broadcasting systems employed in the respective countries and the respective regions.

First of all, as either an instruction issued from the user or an initial operation when the power supply is initiated at a first time, an all channel list forming operation is commenced from a step S301, and then, a channel scanning process executed by the controller 9 is advanced to a step S302. In the step S302, the controller 9 selects, for example, the smallest physical channel number of the VHF band as "M=5", and then, the channel scanning process is advanced to the step S101. In the step S101, the controller 9 executes the same operation as the operation shown in Fig. 1, and then, the channel scanning process is advanced to a step S303.

In the step S303, in order that the controller 9 judges whether or not all of channel lists for the VHF band have been formed, for example, in such a case that a larger physical channel number of the VHF band is "M=12", the controller 9 judges whether or not the physical channel number is equal to "M=12." In the case that all of the channels in the VHF band have been listed in the channel list, the channel scanning process is advanced to a step S304. To the contrary, in the case that all of the channels in the VHF band have not yet been listed in the channel list, the channel scanning process is advanced to a step S306. In the step S306, the controller 9 adds "1" to the physical channel number, and then the channel scanning process is advanced to the step S101. The controller 9 repeatedly executes the process loop defined from the step S101 up to the step S303 until the list as to all of the VHF-band channels is formed.

Next, in a step S304, the controller 9 selects, for instance, the smallest physical channel number of the UHF band as "M=21", and then, the channel scanning process is advanced to the step S201. In the step S201, the controller 9 executes the same operation as the operation shown in Fig. 3, and then, the channel scanning process is advanced to a step S305. In the step S305, in order that the controller 9 judges whether or not all of channel lists for the UHF band have been formed, for example, the controller 9 judges whether or not the physical channel number is equal to "M=69." In the case that all of the channels in the UHF band have been listed in the channel list, the channel scanning process is advanced to a step S308. To the contrary, in the case that all of the channels in the UHF band have not yet been listed in the channel list, the channel scanning process is advanced to a step S307.

In the step S307, the controller 9 adds "1" to the physical channel number, and then the channel scanning process is advanced to the step S201. The controller 9 repeatedly executes the process loop defined from the step S201 up to the step S305 until the list as to all of the UHF-band channels is formed. Subsequently, in a step S308, the controller 9 accomplishes the channel list forming process.

As previously described, in the present embodiments, the below-mentioned digital terrestrial broadcast receiving apparatus and the automatic channel list forming method thereof can be provided: That is, for instance, even under such an environment that the countries are located adjacent to each other, in which the channel arrangements of the digital terrestrial broadcasting systems thereof are different from each other, the digital terrestrial broadcast receiving apparatus and the automatic channel list forming method can form the channel list based upon the suitable center frequency and the frequency offset, and can make the frequency band of the tuned digital terrestrial broadcasting signal coincident with the filter characteristics of the tuner, and also can suitably set the analog interference eliminating filter of the same channel.

In the above-described first and second embodiments, the operations with respect to the DVB-T, namely, the digital terrestrial broadcasting system utilized in Europe have been described in detail. Apparently, similar effects may be achieved even in other broadcasting systems.

## Claims

1. A channel list forming method comprising:
a physical channel number selecting step (S302) for selecting a physical channel number (M);
a country/region selecting step (S102) for selecting one country/region from a plurality of country/regions;
an operation confirming step (S104) for judging whether or not a center frequency of said selected physical channel number (M) in said selected country/region is listed as operating in that country/region in a channel table for the selected country/region;
a step (S105) for receiving a digital broadcasting signal when said operation confirming step judges that there is a channel arrangement corresponding to said selected physical channel in said selected country/region;
a broadcasting signal judging step (S108) for judging whether or not the digital broadcasting signal has been transmitted through said selected physical channel;
a frequency error judging step (S112) for judging whether or not a difference between a center frequency of said received digital broadcasting signal and a center frequency for the selected physical channel number of the selected county/region is located within a defined range of frequency error in such a case that said broadcasting signal judging step judges that the digital broadcasting signal has been transmitted through said selected physical channel;
a step (S113) for acquiring program allocation information, selected from a group including PAT (Program Association Table), PMT (Program Map Table), NIT (Network Information Table) and SDT (Service Description Table), of said received digital broadcasting signal in the case that said frequency error judging step judges that the difference between the center frequency of said received digital broadcasting signal and the center frequency for the selected physical channel number of the selected country/region is located within the defined range of said frequency error; and
a channel list forming step (S117) for forming a channel list based upon said acquired program allocation information.

2. A channel list forming method as claimed in claim 1 wherein:
The operation confirming step is arranged to make judgment whether or not a center frequency of said selected physical channel number (M) is said selected county/region had been made available for an operation in accordance with relationship between frequencies and countries/regions having been defined and registered in a table-manner in advance.

3. A channel list forming method as claimed in claim 1 wherein:
in the case that said operation confirming step judges that the center frequency has not been made available for an operation,
after said operation confirming step, further comprising the steps of:
a country/region selection completion confirming step (S115) for judging whether or not said country/region selecting step has selected all of the countries/regions corresponding to said physical channel number (M); wherein:
the country/region selection completion confirming step selects, when said country/region selection completion confirming step judges that said country/region selecting step has not selected all of the countries/regions corresponding to said physical channel number (M) ("NO" at step S115), a country/region which has not been selected; and wherein:
said operation confirming step judges whether or not a center frequency of said selected physical channel number (M) in said country/region having been selected has been made available for an operation.

4. A channel list forming method as claimed in claim 1, wherein:
in the case that said broadcasting signal judging step judges that the digital broadcasting signal has not been transmitted through said selected physical channel,
after said operation confirming step, further comprising the steps of:
a country/region selection completion confirming step for judging whether or not said country/region selecting step has selected all of the countries/regions corresponding to said physical channel number (M); wherein:
the country/region selection completion confirming step selects, when said country/region selection completion confirming step judges that said country/region selecting step has not selected all of the countries/regions corresponding to said physical channel number (M), a country/region which has not been selected; and wherein:
said operation confirming step judges whether or not there is a channel corresponding to said selected physical channel number (M) in said country/region having been selected.

5. A channel list forming method as claimed in claim 1, wherein:
in the case that said frequency error judging step (S112) judges that the difference between a center frequency of said received digital broadcasting signal and a center frequency for the selected physical channel number of the selected country/region is located outside said defined range of the frequency error,
after said operation confirming step, further comprising the steps of:
a country/region selection completion confirming step for judging whether or not said country/region selecting step has selected all of the countries/regions corresponding to said physical channel number (M); wherein:
the country/region selection completion confirming step selects, when said country/region selection completion confirming step judges that said country/region selecting step has not selected all of the countries/regions corresponding to said physical channel number (M), a country/region which has not been selected; and wherein:
said operation confirming step judges whether or not there is a channel arrangement corresponding to said selected physical channel number (M) in said country/region having been selected.

6. A channel list forming method as claimed in any one of claim 1 to claim 5 wherein:
said broadcasting signal judging step (S108) judges whether or not the digital broadcasting signal has been transmitted through said selected physical channel by employing a carrier-to-noise ratio, a signal-to-noise ratio, an modulation error ratio, or a bit error rate.

7. A receiving apparatus (1) comprising:
a receiving unit (3, 4, 5, 6) for receiving a digital broadcasting signal;
a recording unit (10) in which a physical channel number (M) and a channel list have been stored, and said channel list is a classification of physical channels corresponding to a country/region of said physical channel number; and
a control unit (9) operated in such a manner that one physical channel number and one country/region stored in said recording unit (10) are acquired from the channel list stored in said recording unit (10); in the case that said control unit (9) judges that a center frequency of said selected physical channel number (M) in said acquired country/region is listed as operating in that country/region in a channel table for the selected country/region, the digital broadcasting signal has been transmitted through said selected physical channel, and a difference between a center frequency of the received signal and a center frequency for the selected physical channel number of the selected country/region is located within a defined range of frequency, said control unit (9) acquires program allocation information, selected from a group including PAT (Program Association Table), PMT (Program Map Table), NIT (Network Information Table) and SDT (Service Description Table) of said received digital broadcasting signal; and said control unit (9) forms a channel list based upon said acquired program allocation information.

8. A receiving apparatus (1) as claimed in claim 7, further comprising:
a tuning unit (3) for tuning a desirable physical channel from the digital broadcasting signal received by said receiving unit so as to convert said received digital broadcasting signal into a digital broadcasting signal having a predetermined format;
a demodulating unit (5) for demodulating the digital broadcasting signal outputted from said tuning unit (3);
a demultiplexing unit (6) for outputting a picture component and a sound component from the digital broadcasting signal demodulated by said demodulating unit (5);
picture decoding means (7) for decoding a picture component outputted from said demultiplexing unit (6), and for outputting an image signal; and
sound decoding means (8) for decoding a sound component outputted from said demultiplexing unit (6), and for outputting an audio signal.

9. A combination of a receiving apparatus (1) as claimed in claim 8 and a picture display apparatus comprising:
display means (11) arranged to display thereon a picture based upon the image signal outputted from the receiving apparatus (1).

10. A combination of a receiving apparatus (1) as claimed in claim 8 and a sound output apparatus comprising:
output means (12) arranged to output a sound based upon the audio signal outputted from the receiving apparatus (1).

## Patentansprüche

1. Verfahren zur Erzeugung von Kanallisten, umfassend die folgenden Schritte:
Auswählen (S302) einer physikalischen Kanalnummer zur Auswahl einer physikalischen Kanalnummer (M);
Auswählen (S102) eines Landes/Region zur Auswahl eines Landes/Region aus mehreren Ländern/Regionen;
Bestätigen (5104) des Betriebs zum Beurteilen, ob eine zentrale Frequenz der ausgewählten physikalischen Kanalnummer (M) im ausgewählten Land/Region in einer Kanaltabelle für das ausgewählte Land/Region als in dem ausgewählten Land/Region betrieben aufgeführt wird oder nicht;
Empfangen (S105) eines digitalen Ausstrahlungssignals, wenn die Beurteilung der Betriebsbestätigung ergeben hat, dass es eine dem ausgewählten physikalischen Kanal entsprechende Kanalanordnung in dem ausgewählten Land/Region gibt;
Beurteilen (S108) des Ausstrahlungssignals zum Beurteilen, ob das digitale Ausstrahlungssignal durch den ausgewählten physikalischen Kanal übertragen worden ist oder nicht;
Beurteilen (S112) eines Frequenzfehlers zum Beurteilen, ob eine Differenz zwischen einer zentralen Frequenz des empfangenen digitalen Ausstrahlungssignals und einer zentralen Frequenz für die ausgewählte physikalische Kanalnummer des ausgewählten Landes/Region innerhalb eines definierten Bereichs eines Frequenzfehlers liegt, falls die Beurteilung bei der Ausstrahlungssignalbeurteilung ergibt, dass das digitale Ausstrahlungssignal durch den ausgewählten physikalischen Kanal übertragen worden ist;
Erfassen (S113) von Programmallokationsinformationen, ausgewählt aus einer PAT (Programmassoziationstabelle), PMT (Programmabbildungstabelle), NIT (Netzwerkinformationstabelle) und SDT (Dienstbeschreibungstabelle) enthaltenden Gruppe, des empfangenen digitalen Ausstrahlungssignals, falls die Frequenzfehlerbeurteilung ergibt, dass die Differenz zwischen der zentralen Frequenz des empfangenen digitalen Ausstrahlungssignals und der zentralen Frequenz für die ausgewählte physikalische Kanalnummer des ausgewählten Landes/Region innerhalb des definierten Bereichs des Frequenzfehlers liegt; und
Erzeugen (S117) einer Kanalliste zum Bilden einer Kanalliste auf der Grundlage der erfassten Programmallokationsinformationen.

2. Verfahren zur Erzeugung von Kanallisten nach Anspruch 1, wobei:
das Bestätigen des Betriebs so vorgesehen ist, dass beurteilt wird, ob eine zentrale Frequenz der ausgewählten physikalischen Kanalnummer (M) in dem ausgewählten Land/Region für einen Betrieb gemäß einer Beziehung zwischen Frequenzen und Ländern/Regionen, die im Voraus tabellenartig definiert und registriert worden sind, verfügbar gemacht worden ist oder nicht.

3. Verfahren zur Erzeugung von Kanallisten nach Anspruch 1, wobei:
das Verfahren, falls sich bei der Betriebsbeurteilung ergibt, dass die zentrale Frequenz nicht für einen Betrieb verfügbar gemacht worden ist, nach der Betriebsbeurteilung ferner die folgenden Schritte umfasst:
Bestätigen (S115) der Beendigung der Länder-/Regionenauswahl zum Beurteilen, ob bei der Länder-/Regionenauswahl alle Länder/Regionen, die der physikalischen Kanalnummer (M) entsprechen, ausgewählt worden sind oder nicht; wobei:
beim Bestätigen der Beendigung der Länder-/Regionenauswahl, wenn beim Bestätigen der Beendigung der Länder-/Regionenauswahl beurteilt wird, dass bei der Länder-/Regionenauswahl nicht alle Länder/Regionen, die der physikalischen Kanalnummer (M) entsprechen, ausgewählt worden sind ("NEIN" in Schritt S115), ein Land/Region ausgewählt wird, das bzw. die nicht ausgewählt worden ist; und wobei:
bei der Betriebsbestätigung beurteilt wird, ob eine zentrale Frequenz der ausgewählten physikalischen Kanalnummer (M) in dem Land/Region, das bzw. die ausgewählt worden ist, für einen Betrieb verfügbar gemacht worden ist oder nicht.

4. Verfahren zur Erzeugung von Kanallisten nach Anspruch 1, wobei:
das Verfahren, falls die Beurteilung des Ausstrahlungssignals ergibt, dass das digitale Ausstrahlungssignal nicht durch den ausgewählten physikalischen Kanal übertragen worden ist, nach der Betriebsbestätigung ferner die folgenden Schritte umfasst:
Bestätigen der Beendigung der Länder/Regionenauswahl zum Beurteilen, ob die Länder-/Regionenauswahl alle Länder/Regionen, die der physikalischen Kanalnummer (M) entsprechen, ausgewählt hat oder nicht; wobei:
beim Bestätigen der Beendigung der Länder-/Regionenauswahl, wenn beim Bestätigen der Beendigung der Länder-/Regionenauswahl beurteilt wird, dass die Länder-/Regionenauswahl nicht alle Länder/Regionen, die der physikalischen Kanalnummer (M) entsprechen, ausgewählt hat, ein Land/Region, das bzw. die nicht ausgewählt worden ist, ausgewählt wird; und wobei:
bei der Betriebsbestätigung beurteilt wird, ob es einen Kanal, der der ausgewählten physikalischen Kanalnummer (M) entspricht, in dem Land/Region gibt, das bzw. die ausgewählt worden ist.

5. Verfahren zur Erzeugung von Kanallisten nach Anspruch 1, wobei:
das Verfahren, falls die Frequenzfehlerbeurteilung (S112) ergibt, dass die Differenz zwischen einer zentralen Frequenz des empfangenen digitalen Ausstrahlungssignals und einer zentralen Frequenz für die ausgewählte physikalische Kanalnummer des ausgewählten Landes/Region außerhalb des definierten Bereichs des Frequenzfehlers liegt, nach der Betriebsbeurteilung ferner die folgenden Schritte umfasst:
Bestätigung der Beendigung der Länder-/Regionenauswahl zum Beurteilen, ob die Länder-/Regionenauswahl alle Länder/Regionen, die der physikalischen Kanalnummer (M) entsprechen, ausgewählt hat oder nicht; wobei:
beim Bestätigen der Beendigung der Länder-/Regionenauswahl, wenn bei der Bestätigung der Beendigung der Länder-/Regionenauswahl beurteilt wird, dass die Länder-/Regionenauswahl nicht alle Länder/Region, die der physikalischen Kanalnummer (M) entsprechen, ausgewählt hat, ein Land/Region, das bzw. die nicht ausgewählt worden ist, ausgewählt wird; und wobei:
bei der Betriebsbestätigung beurteilt wird, ob es eine Kanalanordnung, die der ausgewählten physikalischen Kanalnummer (M) entspricht, in dem Land/Region, das bzw. die ausgewählt worden ist, gibt oder nicht.

6. Verfahren zur Erzeugung von Kanallisten nach einem der Ansprüche 1 bis 5, wobei:
beim Beurteilen (S108) des Ausstrahlungssignals beurteilt wird, ob das Ausstrahlungssignal durch den ausgewählten physikalischen Kanal übertragen worden ist oder nicht, indem ein Träger-Rausch-Verhältnis, ein Signal-Rausch-Verhältnis, ein Modulationsfehlerverhältnis oder eine Bitfehlerrate verwendet werden.

7. Empfangsvorrichtung (1), umfassend:
eine Empfangseinheit (3, 4, 5, 6) zum Empfangen eines digitalen Ausstrahlungssignals;
eine Aufzeichnungseinheit (10), in der eine physikalische Kanalnummer (M) und eine Kanalliste gespeichert worden sind, wobei die Kanalliste eine Klassifizierung physikalischer Kanäle, die einem Land/Region der physikalischen Kanalnummer entsprechen, ist; und
eine Steuereinheit (9), die so betrieben wird, dass eine physikalische Kanalnummer und ein Land/Region, die in der Aufzeichnungseinheit (10) gespeichert sind, aus der in der Aufzeichnungseinheit (10) gespeicherten Kanalliste erfasst werden; die Steuereinheit (9) beurteilt, dass eine zentrale Frequenz der ausgewählten physikalischen Kanalnummer (M) in dem erfassten Land/Region als in dem Land/Region betrieben in einer Kanaltabelle für das ausgewählte Land/Region aufgeführt ist, das digitale Ausstrahlungssignal durch den ausgewählten physikalischen Kanal übertragen worden ist und eine Differenz zwischen einer zentralen Frequenz des empfangenen Signals und einer zentralen Frequenz für die ausgewählte physikalische Kanalnummer des ausgewählten Landes/Region innerhalb eines definierten Frequenzbereichs liegt, die Steuereinheit (9) Programmallokationsinformationen, ausgewählt aus einer PAT (Programmassoziationstabelle), PMT (Programmabbildungstabelle), NIT (Netzwerkinformationstabelle) und SDT (Dienstbeschreibungstabelle) enthaltenden Gruppe, des empfangenen digitalen Ausstrahlungssignals erfasst, und die Steuereinheit (9) eine Kanalliste auf der Grundlage der erfassten Programmallokationsinformationen erzeugt.

8. Empfangsvorrichtung (1) nach Anspruch 7, ferner umfassend:
eine Einstellungseinheit (3) zum Einstellen eines erwünschten physikalischen Kanals aus dem von der Empfangseinheit empfangenen digitalen Ausstrahlungssignal, um so das empfangene digitale Ausstrahlungssignal in ein digitales Ausstrahlungssignal mit einem vorgegebenen Format umzuwandeln;
eine Demodulationseinheit (5) zum Demodulieren des aus der Einstelleinheit (3) ausgegebenen digitalen Ausstrahlungssignals;
eine Demultiplex-Einheit (6) zum Ausgeben einer Bildkomponente und einer Tonkomponente aus dem von der Demodulationseinheit (5) demodulierten digitalen Ausstrahlungssignal;
eine Bilddecodiereinrichtung (7) zum Decodieren einer aus der Demultiplex-Einheit (6) ausgegebene Bildkomponente und zum Ausgeben eines Bildsignals; und
eine Tondecodiereinrichtung (8) zum Decodieren einer aus der Demultiplex-Einheit (6) ausgegebenen Tonkomponente und zum Ausgeben eines Audiosignals.

9. Kombination einer Empfangsvorrichtung (1) nach Anspruch 8 und einer Bildanzeigevorrichtung, umfassend:
eine Anzeigeeinrichtung (11), die dazu eingerichtet ist, darauf ein Bild auf der Grundlage des von der Empfangsvorrichtung (1) ausgegebenen Bildsignals anzuzeigen.

10. Kombination einer Empfangsvorrichtung (1) nach Anspruch 8 und einer Tonausgabevorrichtung, umfassend:
eine Ausgabeeinrichtung (12), die dazu eingerichtet ist, Ton auf der Grundlage des von der Empfangsvorrichtung (1) ausgegebenen Audiosignals auszugeben.

## Revendications

1. Procédé de formation de listes de canaux comportant :
une étape de sélection de numéro de canal physique (S302) pour sélectionner un numéro de canal physique (M),
une étape de sélection de pays/région (S102) pour sélectionner un pays/une région parmi une pluralité de pays/régions,
une étape de confirmation d'opération (S104) pour déterminer si oui ou non une fréquence centrale dudit numéro de canal physique sélectionné (M) dans ledit pays/ladite région sélectionné est listée comme fonctionnant dans ce pays/cette région dans un tableau de canaux pour le pays/la région sélectionné,
une étape (S105) pour recevoir un signal de diffusion numérique lorsque ladite étape de confirmation d'opération détermine qu'il existe un agencement de canal correspondant audit canal physique sélectionné dans ledit pays/ladite région sélectionné,
une étape de détermination de signal de diffusion (S108) pour déterminer si oui ou non le signal de diffusion numérique a été transmis à travers ledit canal physique sélectionné,
une étape de détermination d'erreur de fréquence (S112) pour déterminer si oui ou non une différence entre une fréquence centrale dudit signal de diffusion numérique reçu et une fréquence centrale pour le numéro de canal physique sélectionné du pays/de la région sélectionné se situe à l'intérieur d'une plage définie d'erreur de fréquence dans un cas où ladite étape de détermination de signal de diffusion détermine que le signal de diffusion numérique a été transmis à travers ledit canal physique sélectionné,
une étape (S113) pour acquérir des informations d'attribution de programme, choisies parmi un groupe incluant un tableau d'association de programmes (PAT), un tableau de mappage de programmes (PMT), un tableau d'informations de réseau (NIT), et un tableau de description de service (SDT) dudit signal de diffusion numérique reçu dans le cas où ladite étape de détermination d'erreur de fréquence détermine que la différence entre la fréquence centrale dudit signal de diffusion numérique reçu et la fréquence centrale pour le numéro de canal physique sélectionné du pays/de la région sélectionné se situe à l'intérieur de la plage définie de ladite erreur de fréquence, et
une étape de formation de liste de canaux (S117) pour former une liste de canaux sur la base desdites informations d'attribution de programme acquises.

2. Procédé de formation de liste de canaux selon la revendication 1, dans lequel :
l'étape de confirmation d'opération est conçue pour déterminer si oui ou non une fréquence centrale dudit numéro de canal physique sélectionné (M) dans ledit pays/ladite région sélectionné a été rendue disponible pour une opération conformément à une relation entre des fréquences et des pays/des régions ayant été définies et enregistrées d'une manière par tableau à l'avance.

3. Procédé de formation de liste de canaux selon la revendication 1, dans lequel :
dans le cas où ladite étape de confirmation d'opération détermine que la fréquence centrale n'a pas été rendue disponible pour une opération,
après ladite étape de confirmation d'opération, comportant en outre les étapes suivantes :
une étape de confirmation de fin de sélection de pays/région (S115) pour déterminer si oui ou non ladite étape de sélection de pays/région a sélectionné la totalité des pays/des régions correspondant audit numéro de canal physique (M), dans lequel :
l'étape de confirmation de fin de sélection de pays/région sélectionne, lorsque ladite étape de confirmation de fin de sélection de pays/région détermine que ladite étape de sélection de pays/région n'a pas sélectionné la totalité des pays/des régions correspondant audit numéro de canal physique (M) ("NON" à l'étape S115), un pays/une région qui n'a pas été sélectionné, et dans lequel :
ladite étape de confirmation d'opération détermine si oui ou non une fréquence centrale dudit numéro de canal physique sélectionné (M) dans ledit pays/ladite région ayant été sélectionné a été rendu disponible pour une opération.

4. Procédé de formation de liste de canaux selon la revendication 1, dans lequel :
dans le cas où ladite étape de détermination de signal de diffusion détermine que le signal de diffusion numérique n'a pas été transmis à travers ledit canal physique sélectionné,
après ladite étape de confirmation d'opération, comportant en outre les étapes suivantes :
une étape de confirmation de fin de sélection de pays/région pour déterminer si oui ou non ladite étape de sélection de pays/région a sélectionné la totalité des pays/des régions correspondant audit numéro de canal physique (M), dans lequel :
l'étape de confirmation de fin de sélection de pays/région sélectionne, lorsque ladite étape de confirmation de fin de sélection de pays/de région détermine que ladite étape de sélection de pays/région n'a pas sélectionnée la totalité des pays/des régions correspondant audit numéro de canal physique (M), un pays/une région qui n'a pas été sélectionné, et dans lequel :
ladite étape de confirmation d'opération détermine si oui ou non il existe un canal correspondant audit numéro de canal physique sélectionné (M) dans ledit pays/ladite région ayant été sélectionné.

5. Procédé de formation de liste de canaux selon la revendication 1, dans lequel :
dans le cas où ladite étape de détermination d'erreur de fréquence (S112) détermine que la différence entre une fréquence centrale dudit signal de diffusion numérique reçu et une fréquence centrale pour le numéro de canal physique sélectionné du pays/de la région sélectionné se situe à l'extérieur de ladite plage définie de l'erreur de fréquence,
après ladite étape de confirmation d'opération, comportant en outre les étapes suivantes :
une étape de confirmation de fin de sélection de pays/de région pour déterminer si oui ou non ladite étape de sélection de pays/de région a sélectionné la totalité des pays/des régions correspondant audit numéro de canal physique (M), dans lequel :
l'étape de confirmation de fin de sélection de pays/de région sélectionne, lorsque ladite étape de confirmation de fin de sélection de pays/de région détermine que ladite étape de sélection de pays/de région n'a pas sélectionné la totalité des pays/des régions correspondant audit numéro de canal physique (M), un pays/une région qui n'a pas été sélectionné, et dans lequel :
ladite étape de confirmation d'opération détermine si oui ou non il existe un agencement de canaux correspondant audit numéro de canal physique sélectionné (M) dans ledit pays/ladite région ayant été sélectionné.

6. Procédé de formation de liste de canaux selon l'une quelconque des revendications 1 à 5, dans lequel :
ladite étape de détermination de signal de diffusion (S108) détermine si oui ou non le signal de diffusion numérique a été transmis à travers ledit canal physique sélectionné en utilisant un rapport porteuse sur bruit, un rapport signal sur bruit, et un rapport d'erreur de modulation, ou un taux d'erreur binaire.

7. Appareil de réception (1) comportant :
une unité de réception (3, 4, 5, 6) pour recevoir un signal de diffusion numérique,
une unité d'enregistrement (10) dans laquelle un numéro de canal physique (M) et une liste de canaux ont été mémorisés, et ladite liste de canaux est une classification de canaux physiques correspondant à un pays/une région dudit numéro de canal physique, et
une unité de commande (9) opérant de telle manière qu'un numéro de canal physique et un pays/une région mémorisés dans ladite unité d'enregistrement (10) sont acquis à partir de la liste de canaux mémorisés dans ladite unité d'enregistrement (10), dans le cas où ladite unité de commande (9) détermine qu'une fréquence centrale dudit numéro de canal physique sélectionné (M) dans ledit pays/ladite région acquis est listée comme fonctionnant dans ce pays/cette région dans un tableau de canaux pour le pays/la région sélectionné, le signal de diffusion numérique a été transmis à travers ledit canal physique sélectionné, et une différence entre une fréquence centrale du signal reçu et une fréquence centrale pour le numéro de canal physique sélectionné du pays/de la région sélectionné est comprise à l'intérieur d'une plage de fréquence définie, ladite unité de commande (9) acquiert des informations d'attribution de programme, choisies parmi un groupe incluant un tableau d'association de programmes (PAT), un tableau de mappage de programmes (PMT), un tableau d'informations de réseau (NIT), et un tableau de description de service (SDT) dudit signal de diffusion numérique reçu, et ladite unité de commande (9) forme une liste de canaux sur la base desdites informations d'attribution de programme acquises.

8. Appareil de réception (1) selon la revendication 7, comportant en outre :
une unité de syntonisation (3) pour syntoniser un canal physique souhaitable à partir du signal de diffusion numérique reçu par ladite unité de réception de manière à convertir ledit signal de diffusion numérique reçu en un signal de diffusion numérique ayant un format prédéterminé,
une unité de démodulation (5) pour démoduler le signal de diffusion numérique délivré en sortie par ladite unité de syntonisation (3),
une unité de démultiplexage (6) pour délivrer en sortie une composante d'image et une composante de son à partir du signal de diffusion numérique démodulé par ladite unité de démodulation (5),
des moyens de décodage d'image (7) pour décoder une composante d'image délivrée en sortie par ladite unité de démultiplexage (6), et pour délivrer en sortie un signal d'image, et
des moyens de décodage de son (8) pour décoder une composante de son délivrée en sortie par ladite unité de démultiplexage (6), et pour délivrer en sortie un signal audio.

9. Combinaison d'un appareil de réception (1) selon la revendication 8 et d'un appareil d'affichage d'images comportant :
des moyens d'affichage (11) conçus pour afficher sur ceux-ci une image sur la base du signal d'image délivré en sortie par l'appareil de réception (1).

10. Combinaison d'un appareil de réception (1) selon la revendication 8 et d'un appareil de sortie de son comportant :
des moyens de sortie (12) conçus pour délivrer en sortie un son sur la base du signal audio délivré en sortie par l'appareil de réception (1).
